Europäisches Patentamt

European Patent Office

Office européen des brevets

(11) Publication number: **0 396 304 B1**

# EUROPEAN PATENT SPECIFICATION

(45) Date of publication of patent specification: **13.12.95**

(51) Int. Cl.⁶: **C09J 133/06**, C09J 133/26, C09J 139/06, D06N 7/00

(21) Application number: **90304389.1**

(22) Date of filing: **24.04.90**

(54) **Wallpaper adhesives**

(30) Priority: **24.04.89 US 341972**

(43) Date of publication of application:
**07.11.90 Bulletin 90/45**

(45) Publication of the grant of the patent:
**13.12.95 Bulletin 95/50**

(84) Designated Contracting States:
**AT BE CH DE DK ES FR GB GR IT LI LU NL SE**

(56) References cited:
**EP-A- 0 077 618**
**EP-A- 0 214 760**

(73) Proprietor: **RHONE-POULENC SURFACTANTS
AND SPECIALTIES, L.P.
125 Black Horse Lane
Monmoth Junction
New Jersey 08852 (US)**

(72) Inventor: **Yeung, Dominic, Wai Kwing
35 Charles Street West, Apt. 1706
Toronto,
Ontario M4Y 1R6 (CA)**

(74) Representative: **Holmes, Michael John et al
Frank B. Dehn & Co.
Imperial House
15-19 Kingsway
London WC2B 6UZ (GB)**

**Description**

The present invention relates to adhesives for wall-coverings such as wallpaper, to wallcoverings bearing adhesives and to the bonding of wallcoverings to a surface by means of the adhesives.

Known adhesives for wallcoverings consist of four general chemical types; (i) starch, (ii) cellulose, (iii) alkaline-treated carboxylated acrylic polymers (crosslinked and non-crosslinked), and (iv) crosslinked ionic polyacrylamides. Commercial products exist in three different physical forms; as powders, as aqueous solutions and as emulsions (both in water-in-oil and in oil-in-water types). Each type of adhesive has its merits and disadvantages. For example, natural polymers such as starch and cellulose have reasonably good slip and open time. In powder form, however, they are not easily dissolved in water to give solutions of higher concentrations. Moreover, the powder is dusty and may create health hazards to users, particularly when fungicides or bactericides are present in the product.

Synthetic polymers offer many advantages over natural ones. The advantages include thermal stability, lack of biodegradability, good adhesion at low coat weight, low dusting, and easily achieved homogeneous application. A disadvantage of alkaline-treated carboxylated acrylic copolymers is the need to activate them with alkali. Thus two carefully controlled coatings are required for application to wallpaper. Commercially, this type of adhesive is sold in a two-component pack:
oil-in-water emulsion and alkaline solution.

The use of ionic polyacrylamides as adhesives for wall-coverings has been described in United States Patent No. 4,361,452 and corresponding Canadian Patent No. 1,144,290. Polymeric adhesive systems based on these patents suffer from several disadvantages. These polymers are substantially dry and consist of unswollen particles which, prior to application to the wallcovering, are suspended in mineral spirits. Due to the lack of water, the adhesive does not penetrate deeply into the paper substrate. Consequently dusting of adhesive which is released from the paper becomes a severe problem during pasting procedure. Also, since the adhesive coat lies mostly on the surface of paper, upon immersion in water, it becomes detached from the paper relatively quickly. This creates problems in the application of wallpaper. The surface of paper coated with these adhesive systems does not show significant difference in respect to hand-feel from the uncoated surface. This is inconvenient since for quality control the manufacturer has to spend substantially more time differentiating between the pasted and unpasted paper. Also, the polymer dispersion in mineral spirits displays low stability. Consequently, constant agitation of the adhesive is required in order to prevent components of the adhesive from settling out. The required agitation is normally achieved by circulating the adhesive composition constantly through the apparatus from which it is normally applied to the wallcovering; circulation must be continued for as long as the composition is present in the apparatus even if no wallcovering is being coated.

EP-A-0077618 proposes the use of a blend of water-insoluble but water swellable anionic polymer particles and water insoluble but water swellable cationic polymer particles as an adhesive coating for water wettable prepasted wallcoverings. The coating is typically applied to a wallcovering as a dispersion of the blend of particles in a volatile organic liquid such as a low boiling hydrocarbon. Such liquid compositions are required to be substantially non-aqueous to avoid undesirable interaction of the two forms of polymers in the dispersion.

EP-A-0214760 suggests the use of a water soluble or water swellable copolymer of an ethylenically unsaturated ionic (preferably cationic) monomer, an ethylenically unsaturated monomer carrying a pendant hydrophobic group and optionally also an ethylenically unsaturated nonionic monomer and/or a crosslinking agent as the adhesive component of an aqueous adhesive composition.

According to one aspect of the present invention there is provided an adhesive composition suitable for application to a wallcovering to form a prepasted wallcovering, which composition is a water-in-oil emulsion comprising an organic solvent, a surfactant, a water-swollen crosslinked ionic polymeric component obtained by polymerising one or more ethylenically unsaturated water-soluble monomers in the presence of water and at least 100 ppm of a water-soluble crosslinking agent, the water content of the composition being such that, when applied to a wallcovering the composition forms a continuous, substantially particle-free film.

The water in the composition performs two functions. The composition is in the form of an emulsion and if the water content is too low the emulsion will lose stability and polymer will fall out of the emulsion. Consequently water must be present in an amount sufficient to maintain stability. The water is also present in an amount sufficient to ensure that the composition, when applied to the wallcovering, forms a continuous film which is substantially particle free. This gives advantages over compositions which do not form a film but remain as discrete particles, for instance those of U.S. Patent No. 4,361,452, as discussed below. Compliance with this latter condition is readily demonstrated by casting an adhesive composition of the invention on a glass plate. The composition dries to a smooth tack-free peelable film, which is clear and does not have the milky appearance that is characteristic of the presence of finely divided particles. An effective amount of water is an amount which satisfies these two conditions.

Ethylenically unsaturated monomers that can be polymerized to form the required polymeric component or components include ionic monomers, for example alkali metal acrylates and methacrylates such as sodium acrylate and methacrylate, alkali metal salts of 2-acrylamido-2-methylpropanesulfonic acid, preferably the sodium salt. The preferred ionic monomer is sodium acrylate.

The polymeric component of the composition must be ionic and therefore must be based at least in part, on ionic monomers but it can also contain nonionic monomers, for example acrylamide, 2-hydroxyethylacrylate, hydroxypropylacrylate, dimethylaminoethylacrylate, dimethylaminoethylmethacrylate and vinyl pyrrolidone. The preferred nonionic monomer is acrylamide.

Ionic monomers incorporated in the polymeric component are anionic, so that normally the polymeric component is anionic. Some nonionic monomers contain basic nitrogen atoms, for example dimethylaminoethylacrylate. If such a monomer is present in the polymer and if the polymer is present in acidic solution then the basic nitrogen atom may become protonated to form a cation. Hence the polymeric component will be amphoteric.

The polymeric component can be a homopolymer or a copolymer although it must be ionic and therefore cannot be a homopolymer of a nonionic monomer. The adhesive properties of the composition depend to some extent on the degree of crosslinking and the degree of charge. Although the composition may contain only one polymeric component it is preferred that the composition contain two or more polymeric components that differ in their degree of crosslinking, or charge, or both, so that by blending the components in different proportions the properties of the composition can be optimized.

Preferably the polymeric component or components are made by inverse emulsion polymerization and the degree of crosslinking of each component is controlled by the amount of crosslinking agent present in the inverse emulsion polymerization reaction by which the polymer is made. The charge density is controlled by varying the proportion of charged monomers present in the polymer. For instance homopolymer sodium acrylate has maximum charge density. To reduce charge density the sodium acrylate can be copolymerized with an uncharged monomer, for example, acrylamide, and the degree of charge density decreases as the amount of acrylamide increases.

Inverse emulsion polymerization, of water soluble ethylenically unsaturated monomers is a well documented technique; see for instance United States Patent No. 3,284,393 of Vanderhoff et. al. A stable water-in-oil emulsion is composed of an aqueous phase and an organic phase. The aqueous phase comprises water and water soluble polymerizable monomers in an approximate amount of about 1:1 by weight. The pH of the aqueous phase is usually in the range of about 7 to 9 and is preferably about 8, prior to mixing with the organic phase. The organic phase comprises a hydrocarbon solvent and a water-in-oil emulsifier of low HLB value, suitably below 6. Any known hydrocarbon solvent may be used for this purpose but preferred hydrocarbon solvents are mineral spirits. For reasons of product safety, the mineral spirits should be of low aromatic content or free of aromatic content. Suitable solvents include those aliphatic hydrocarbon solvents commercially available under the trademarks Isopar K and Isopar M from Esso and Shell Sol 715, from Shell. Suitable water-in-oil emulsifiers include sorbitan esters of fatty acids and a preferred one is sorbitan monooleate, which has a low HLB value of 4.3. This can be used alone or blended with one or more $C_{12}$ to $C_{15}$ alcohols ethoxylated with, on average, three to four ethylene oxide molecules. Another suitable emulsifier is available from Witco under the trademark Witcomide 511. It is believed that Witcomide 511 contains approximately 50% unesterified N,N-diethanol fatty amide, the fatty groups present on the emulsifier chain containing approximately 64% oleyl, 33% linoleic and 3% palmityl. Approximately 40% by weight of the surfactant is believed to be the monoesterified variation of the compound, the ester group containing 15 to 22 carbon atoms. Additionally, small amounts of diesterified material are also present.

Any commercially available polymerization initiator can be used, but peresters and azo compounds, for instance azobisisobutyronitrile, are preferred.

Examples include:

α-cumylperoxyneodecanoate,

tert-butylperoxypivalate,

2,5-dimethyl-2,5-di-(2-ethylhexanoylperoxy)hexane,

azobisisobutyronitrile (AIBN),

2,2'-azobis-(2,4-dimethylpentanenitrile),

2,2'-azobis-(2-methylbutanenitrile),

2,2'-azobis-(2,4-dimethyl-4-methoxyvaleronitrile),

2,2'-azobis-(2-amidinopropane)hydrochloride,

sodium persulfate,

benzoyl peroxide and

redox systems such as bisulfite and tert-butylperoxide.

As indicated above, the preferred crosslinking agent is N,N-methylenebisacrylamide but it will be appreciated by those skilled in the art that other water-soluble crosslinking agents, can be used. Mention is made of the crosslinking agent available from Alkaril under the trade mark Alkamer TMP-3E-A which is the product of reacting trimethylolpropane with three moles of ethylene oxide followed by esterification with acrylic acid.

The polymeric component must be crosslinked but the degree of crosslinking should not be too high. When preparing a copolymer, it is preferred not to use an amount of crosslinking agent in excess of about 0.5% by weight, based on the weight of copolymer, i.e. about 5,000 ppm, as this may result in beads of copolymer separating from the system. When preparing homopolymers it is possible to use a greater amount of crosslinking agent, up to 20,000 ppm although an amount of 10,000 to 12,000 ppm is preferred. It is found that at least 100 ppm of crosslinking agent are necessary to obtain an adhesive with good paste body; if less than 100 ppm are used the adhesive displays stringiness, which is unacceptable.

It should be understood that references to amounts of crosslinking agent are references to the amounts of crosslinking agent added to the polymerization reaction mixture. Of the crosslinking agent added to the polymerization reaction mixture, how much is incorporated into the polymer product is not readily determinable and is not known.

The product of inverse emulsion polymerization is an emulsion containing water swollen polymer particles not larger than 10 microns, preferably not larger than 5 microns, in size and, of course, the hydrocarbon solvent and the emulsifier. Usually the product of inverse emulsion polymerization contains more water than is ideal for the adhesive composition, so the polymerization product is subjected to some degree of dewatering, suitably by vacuum stripping. It is preferred that the adhesive composition shall contain at least about 10% by weight, more preferably at least about 20% by weight of water. Too much water in the adhesive composition may cause foaming and may also cause plating out, i.e. separating out, of polymer when the adhesive composition is being applied to the wallcovering. It is therefore preferred that the amount of water shall not exceed about 40% by weight, and an amount of water of about 28 to 30% by weight is particularly preferred. The surfactant is preferably present in an amount up to about 7% by weight, more preferably about 5%, and is the emulsifier used in the polymerization. The polymeric component or components preferably constitute about 25 to 35% by weight of the composition and the balance is organic solvent which is suitably mineral spirits from the inverse emulsion polymerization step. It is found that compositions having a viscosity at 25°C of about 200 to 600 cps gives good performance and in general it is preferred that the viscosity shall be between 300 and 500 cps.

It has been observed in studies with a scanning electron microscope that when the composition of this invention is used as an adhesive it forms a continuous particle-free film. This gives rise to advantages. In particular, it allows for controlled penetration into the paper to give better bonding between paper and adhesive with less separation of adhesive from paper when exposed to water, as compared with the adhesive compositions disclosed in United States Patent No. 4,361,452. The mechanical integrity of the film also results in reduced dusting.

The adhesive compositions of the invention display various advantages when compared with previous adhesive compositions for use on wallcoverings. The water that is present in the adhesive composition assists in suppressing dusting during coating of the wallcovering with the adhesive composition. The presence of water assists in the penetration of the adhesive into the wallcovering, so that as well as alleviating the dusting problem, the problem of the adhesive becoming detached from the wallcovering is alleviated. The adhesive composition is also more stable than the compositions disclosed in the above-mentioned U.S. Patent No. 4,361,452 and constant agitation is not necessary to avoid settling out. The compositions are stable emulsions, so it is not necessary to circulate the compositions continuously to provide agitation to prevent settling out. The compositions are odourless. Normally they need contain no biocides, although the presence of biocides is not excluded by the invention.

After application to the wallcovering the compositions of the invention leave a somewhat roughened surface which is readily apparent to the touch, so that it is easy in quality control operations to distinguish between wallcovering that has been coated with the adhesive composition and wallcovering that has not been coated. The compositions give better paste body after booking i.e. when the prepasted wallcovering is wetted prior to application to a wall, if it is folded and then left for two or three minutes it thickens and develops a high viscosity, and after application and drying of the wallcovering shrinkage and exposure of seams do not occur. The compositions of the invention are compatible with the various conventional coating or printing methods used on wallcoverings, such as flexo, gravure and Dehlgren.

The adhesive compositions of the invention are thermally stable, which is of importance as they may be subjected to high temperatures during application to a wallcovering. For instance, hot embossing of wallpaper is normally done with infrared heat at a temperature of 350 to 400°C, and this has no adverse effect on the adhesive performance. This is a considerable advantage particularly as compared with starch adhesives.

In one embodiment, the invention provides an adhesive composition in the form of a water-in-oil emulsion comprising a blend of two homopolymers of sodium acrylate with different degrees of crosslinking, water, mineral spirits and a surfactant which desirably is a low HLB surfactant, i.e. has an HLB value less than 6. The one homopolymer of sodium acrylate is crosslinked with 1.1% by weight based on polymer of N,N'-methylenebisacrylamide (i.e. 11,000 ppm crosslinking agent) to form a highly crosslinked polymer. The other homopolymer of sodium acrylate is crosslinked with 0.25% by weight based on polymer of N,N-methylenebisacrylamide (i.e. 2500 ppm crosslinking agent) to form a low crosslinked polymer. The highly crosslinked polymer is normally used in excess, as compared with the low crosslinked polymer and a ratio of highly crosslinked polymer to low crosslinked polymer in the range 1:1 to 9:1 is preferred.

In another embodiment which gives better paste-body, use is made of polymers having reduced charge density. The polymer component is a blend of two sodium acrylate-acrylamide copolymers. The one copolymer is formed by polymerizing acrylamide and sodium acrylate at a molar ratio of 2:8 (i.e. 15.8 : 84.2 weight ratio) with about 0.10% to 0.25% (i.e. about 1000 to 2500 ppm based on the copolymer) of N,N-methylenebisacrylamide crosslinking agent. This copolymer is designated as 80% anionic. The other copolymer is formed by polymerizing acrylamide and sodium acrylate at a molar ratio of 4 : 6 (i.e. 33.5 : 66.5 weight ratio) with about 0.10% to 0.25% N,N-methylenebisacrylamide crosslinking agent. This copolymer is designated as 60% anionic. It is possible to replace some of the sodium acrylate with sodium methacrylate so that there are obtained terpolymers of sodium acrylate, sodium methacrylate and acrylamide. 2-Hydroxyethylacrylate can be used in place of the acrylamide.

It is preferred that even the low anionic copolymer shall have a charge density not less than 50%, as it is found that copolymers with greater than 50% charge density give better performance. The ratio of the amounts of the two polymers can vary between wide ranges, say from 9:1 to 1:9, but it is preferred to have an excess of the more anionic copolymer and a ratio of higher anionic copolymer to lower anionic copolymer in the range 1 : 1 to 9 : 1 is suitable, with a ratio of about 5 : 1 being particularly preferred. Good results have also been obtained when using a blend in which the lower anionic copolymer, e.g. the 60% anionic copolymer, has been prepared with a lesser amount of the crosslinking agent, e.g. 0.05% of N,N-methylenebisacrylamide.

In yet another embodiment, use is made of a blend of two copolymers of, for example, sodium acrylate and acrylamide having different degrees of crosslinking. The one copolymer is prepared using 1000 to 2500 ppm of N,N-methylenebisacrylamide crosslinking agent and the other is made using about 500 ppm of N,N-methylenebisacrylamide crosslinking agent. The molar ratio of sodium acrylate to acrylamide in each copolymer is preferably about 8 : 2, i.e. both copolymers are about 80% anionic. The acrylamide can be replaced by 2-hydroxyethylacrylate.

The adhesive composition is usually applied at a rate in the range 2 to 8 $g/m^2$ dry wt. Of the various kinds of wallpaper on which the adhesive composition can be used mention is made of paper, vinyl, PVC expandable vinyl, foil, peelable and strippable.

The adhesive composition is applied to the back surface of a wallcovering to provide a prepasted wallcovering which requires only to be wetted on the back surface to render it adhesive so that it can be applied to and will adhere to a wall. The composition is normally applied in a continuous process to the back surface of a roll of wallcovering, by means of one or more rollers whose surface(s) carry the liquid composition from a bath and onto the back surface. The wet back surface is then subjected to a jet of hot air, to drive off the mineral spirits and water components of the composition, leaving the polymeric components on the wallcovering. If the wallcovering is of paper then some of the water will be absorbed by the paper and will carry the polymeric components deeper into the paper. This assists in penetration and reduces dusting problems.

The invention is further illustrated in the following Examples.

Example 1

A water-in-oil emulsion of crosslinked hompolymer of sodium acrylate was prepared as follows:

An aqueous phase of pH 8.5 containing acrylic acid (200 g), water (238 g), N,N-methylenebisacrylamide (0.5 g) and sodium hydroxide (223 g) was homogenized with a Warner blender for 15 seconds to achieve a particle size less than 5 μm, with an oil phase containing isoparaffin mineral spirits (Shell Sol 1715 commercially available from Shell, 300 g), sorbitan monooleate (36 g) and $C_{12-15}$ alcohols ethoxylated with 3 moles of ethylene oxide (17 g). The resulting emulsion was then transferred to a suitable reaction vessel with stirring and was purged with nitrogen to remove oxygen in the system. α-Cumylperoxyneodecanoate (0.35 g) was added and the temperature of the emulsion increased to about 30-35°C. An exotherm started and continued for about 4 - 8 hours; cooling was required to maintain this temperature. After the exotherm ceased, the temperature of the batch was held at 50-55°C for an hour with a second portion of α-cumylperoxyneodecanoate (0.2 g) added. The batch was then cooled to room temperature.

The synthesis was repeated with different amounts of N,N-methylenebisacrylamide incorporated to the aqueous phase. The results are shown in Table I.

TABLE I

| Crosslinked Homopolymers of Sodium Acrylate in w/o Emulsion | | | |
|---|---|---|---|
| Experiment | Amount of N,N-Methylenebisacrylamide (based on acrylic acid monomer) | Emulsion Viscosity | Emulsion Stability |
| A | 500 ppm | 200 cps | stable |
| B | 1,000 ppm | 200 cps | stable |
| C | 2,500 ppm | 360 cps | stable |
| D | 4,000 ppm | 300 cps | stable |
| E | 10,000 ppm | 300 cps | stable |
| F | 11,000 ppm | 440 cps | stable |
| G | 15,000 ppm | 360 cps | stable |
| H | 20,000 ppm | 460 cps | stable |

The polymer emulsions thus prepared were evaluated as prepasted wallpaper adhesives by simply performing draw-down onto wallpapers of coat weight about 4 g/m². The coated wallpaper was dried at 120°C for one minute. After soaking the prepasted paper in water for 15 seconds, the paste properties were examined. The results are gathered in Table II.

TABLE II

| Performance Results of Crosslinked Homopolymers of Sodium Acrylate | | |
|---|---|---|
| Sample | Blend Weight-ratio | Paste Properties (adhesion, paste-body, slip etc.) |
| C:F | 1:5 | excellent |
| C:F | 1:9 | excellent |
| C:F | 1:3 | good |
| C:E | 1:5 | excellent |
| C:E | 1:3 | good |
| C:E | 1:9 | good |
| B:E | 1:9 | excellent |
| B:E | 1:5 | good |
| A:E | 1:5 | good |
| D:E | 1:3 | acceptable |
| D:E | 1:5 | acceptable |
| C:D | 1:5 | acceptable |
| C:G | 1:5 | acceptable |
| C:H | 1:5 | acceptable |
| C | --- | barely acceptable |
| F | --- | barely acceptable |
| H | --- | barely acceptable |

A blend of F and C at 5:1 was subjected to partial dewatering at 55°C under vacuum (28" Hg) to reduce water content to 28-30%. Both the non-dewatered and partially dewatered samples were evaluated

6

at a paper mill using Dehlgren coating application. It was found that the partially dewatered gave no polymer tiny particles separating on the roller. With the non-dewatered composition some tiny particles did separate. Separated particles will create lines on the paper.

Example 2

The same synthesis procedure was followed as in Example 1, except that part of acrylic acid was replaced by acrylamide. The results are shown in Table III.

Although some of the samples showed microbeads separating out, the compositions could be used as wallpaper adhesives after the separated beads had been removed.

TABLE III   Crosslinked Acrylamide-Sodium Acrylate Copolymers in w/o Emulsion

| Experiment | Acrylamide/Sodium Acrylate Molar Ratio | Amount of N,N-methylenebis-acrylamide (based on total monomer) | Emulsion viscosity | Emulsion Stability |
|---|---|---|---|---|
| A | 2:8 | 11,000 ppm | 440 cps | microbeads separating out |
| B | 2:8 | 5,000 ppm | 400 cps | microbeads separating out |
| C | 2:8 | 2,500 ppm | 600 cps | stable |
| D | 2:8 | 500 ppm | 550 cps | stable |
| E | 4:6 | 11,000 ppm | 330 cps | microbeads separating out |
| F | 4:6 | 2,500 ppm | 600 cps | stable |
| G | 4:6 | 500 ppm | 570 cps | stable |
| H | 6:4 | 2,500 ppm | 200 cps | microbeads separating out |
| I | 7:3 | 2,500 ppm | 230 cps | |
| J | 8:2 | 2,500 ppm | 540 cps | |
| K | 6:4 | 800 ppm | 200 cps | |
| L | 8:2 | 800 ppm | 230 cps | |

The blend of the two copolymers C and F in a weight ratio of 5 : 1 yielded an adhesive composition having the following characteristics:

| | |
|---|---|
| water | 30% |
| polymer | 33-35% |
| surfactant | 5% |
| mineral spirits | balance |
| appearance | light-amber emulsion |
| odour | none |
| bulk viscosity at 25°C | 550 cps |
| flashpoint (close cup) | 52-54°C |
| stability over 1 year | stable |

The polymer emulsions thus prepared were evaluated in the same manner as in Example 1. Results are gathered in Table IV.

TABLE IV

| Performance Results of Crosslinked Acrylamide-Sodium Acrylate Copolymers | | |
|---|---|---|
| Sample | Blend Weight-ratio | Paste Properties (adhesion, paste-body etc.) |
| C:F | 5:1 | excellent |
| C:F | 3:1 | excellent |
| C:F | 7:1 | excellent |
| C:F | 1:1 | excellent |
| C:F | 1:3 | excellent |
| C:F | 1:5 | excellent |
| C:F | 1:9 | excellent |
| C:D | 5:1 | excellent |
| C:E | 3:1 | excellent |
| C:G | 5:1 | good to excellent |
| F:G | 5:1 | good to excellent |
| C:C'(from Table 1) | 5:1 | good to excellent |
| C':C | 5:1 | good to excellent |
| C':D | 5:1 | good to excellent |
| C':F | 5:1 | good to excellent |
| C:L | 5:1 | acceptable to good |
| C | --- | good |
| F | --- | good |
| D | --- | acceptable |
| G | --- | acceptable |
| (C' ≡ C sample in Table 1) | | |

The compositions were used as an adhesive on wallcovering and displayed good paste-feel, paste-body, hangability, pliability, etc. They still gave good body and adhesion after soaking for two minutes.

It was found that proper selection of charge density, blend ratios and degree of crosslinking were important for achieving optimum performance.

Again, it was found that the emulsion blends after partial removal of water to about 30% gave no tiny polymer particles separating out onto the applicator roller, as evaluated in a paper mill.

When the emulsion was subjected to dewatering by vacuum distillation (55°C, 28" Hg), the stability of emulsion decreased with the amount of water stripped out. Emulsion was very stable at 20-30% water content. A jelly-layer was observed at 10-20% water after standing at room temperature for 24 hours, thus agitation was needed before use. Below 10%, the emulsion was pasty and lumpy particles separated out at the bottom of the reaction vessel during distillation. Thus the optimum level was between 20-30%.

Example 3

Film-forming properties:

In this example the film-forming properties of a composition in accordance with this invention were examined and were compared with a commercial product believed to be made in accordance with United States Patent No. 4,361,452 of Allied Colloids. Comparison was also made with a product prepared in accordance with an example of British Patent No. 1,453,951 of ICI.

The composition in accordance with this invention consisted of a water-in-oil emulsion containing crosslinked copolymer (35%), water (30%), surfactants (5%) and mineral spirits (30%). The product of Allied Colloids is available under the trade mark Collafix PP-4 and consisted of dry and unswollen polymer particles (as 70% solids) suspension in mineral spirits, the water content of which is less than 0.5%. The composition in accordance with British Patent No. 1,453,951 was a non-aqueous dispersion of polyvinyl pyrrolidone in petrol (boiling range 80-100°C) using a graft polymer as a suspending stabilizer.

The samples were drawn-down by dispersing smoothly on glass microscopic slides, heated, dried and then fractured with a small piece mounted to the stub of a scanning electron microscope (SEM). The samples were sputter-coated using gold-palladium as a source to prevent "charging" in the SEM. The samples were then examined with an SEM (Amray model 1820D), and the results were shown in photographs of the products.

The composition in accordance with the invention exhibited a true film-forming material appearance when fractured, as shown at a magnification of X2000, and 1b at a magnification of X9000. No particles were observed when edges were examined at magnifications of X755, X1218 and X1868 respectively. The fracture boundaries of the sample were relatively straight, suggesting the absence of particles, since a particulate system would generate an irregular (jagged) break boundary.

Photographs of the Allied Colloids product at magnifications of X5250 and X7750, respectively and clearly showed particles whose size range is about 0.5 to 1.5 m. The product in accordance with the ICI patent showed some particles, but fewer than the Allied Colloids product. The particle size range was about 0.5 to 1.5 $\mu$m, when examined at magnifications of X5250 and X7750.

Example 4

The same synthesis procedure was followed as in Example 1, except that part of acrylic acid was replaced by 2-hydroxyethylacrylate. The polymers thus prepared were evaluated in the same way as in Example 1. The results are summarized in Table V.

TABLE V: Synthesis and Performance Results of Hydroxyethylacrylate - sodium acrylate copolymers

| Experiment | Hydroxyethylacrylate/sodium Acrylate molar ratio | Amount of N,N-methylene-bisacrylamide (based on total monomers) | Emulsion Viscosity and Stability | Blend Weight-Ratio | Paste Properties |
|---|---|---|---|---|---|
| A | 2:8 | 10,000 ppm | Lumpy: microbeads separating out | --- | --- |
| B | 2:8 | 5,000 ppm | Lumpy: microbeads separating out | --- | --- |
| C | 2:8 | 2,500 ppm | stable emulsion 380 cps | --- | acceptable |
| D | 2:8 | 500 ppm | stable emulsion 380 cps | --- | acceptable |
| E | 4:6 | 2,500 ppm | unstable emulsion; | --- | --- |
| F | 4:6 | 500 ppm | became gelled during preparation | --- | --- |
| C:D | --- | --- | | 5:1 | excellent |
| C:D | --- | --- | | 3:1 | excellent |
| C:D | --- | --- | | 7:1 | good to excellent |

Example 5

The same synthesis procedure was followed as in Example 2, except part of acrylic acid was replaced by methacrylic acid, and the resulting polymers were evaluated in the same way as in Example 1. The

TABLE VI — Synthesis and Performance Results of Terpolymers of Acrylamide (AM) Sodium Acrylate (SA) and Sodium Methacrylate (SM)

| Experiment | AM:SA:SM Molar Ratio | N,N-Methylene-bisacrylamide (based on total monomers) | Emulsion viscosity and Stability | Blend Ratio | Paste Properties |
|---|---|---|---|---|---|
| A | 4 : 3 : 3 | 2,500 ppm | Stable Emulsion 810 cps | ----- | ---------- |
| B | 4 : 4.5 : 1.5 | 2,500 ppm | Stable Emulsion 1300 cps | ----- | ---------- |
| C | 2 : 4: 4 | 2,500 ppm | Stable Emulsion 1220 cps | ----- | --------- |
| D | 2 : 6 : 2 | 2,500 ppm | Stable Emulsion 1450 cps | ----- | ---------- |
| E | 4 : 1.5 : 4.5 | 2,500 ppm | Stable Emulsion 500 cps | ----- | acceptable |
| F | 2 : 2 : 6 | 2,500 ppm | Stable Emulsion 510 cps | ----- | acceptable |
| F:E | ------------- | --------- | -------- | 5:1 | excellent |
| F:E | ------------- | --------- | -------- | 3:1 | excellent |
| F:E | ------------- | --------- | -------- | 7:1 | excellent |
| C:A | ------------- | --------- | -------- | 5:1 | excellent |
| C:A | ------------- | --------- | -------- | 3:1 | excellent |
| C:A | ------------- | --------- | -------- | 7:1 | excellent |
| D:B | ------------- | --------- | -------- | 5:1 | excellent |
| D:B | ------------- | --------- | -------- | 3:1 | excellent |
| D:B | ------------- | --------- | -------- | 7:1 | excellent |
| F:E | ------------- | --------- | -------- | 1:1 | excellent |
| F:E | ------------- | --------- | -------- | 1:5 | excellent |

results are gathered in Table VI.

EP 0 396 304 B1

Example 6

The same synthesis procedure was followed as in Example 1, except part of acrylic acid was replaced by dimethylaminoethylmethacrylate, and the polymers thus synthesized were evaluated in the same way as in Example 1. The results are shown in Table VII.

TABLE VII  Synthesis and Performance Results of Dimethylaminoethylmethacrylate (DMAEMA) – Sodium Acrylate (SA) Copolymers

| Experiment | DMAEMA:SA Molar Ratio | Amount of N,N-methylenebis-acrylamide (based on total monomer) | Emulsion viscosity and Stability | Blend Ratio | Paste Properties |
|---|---|---|---|---|---|
| A | 2:8 | 10,000 ppm | 420 cps stable emulsion | — | — |
| B | 2:8 | 5,000 ppm | 330 cps stable emulsion | — | — |
| C | 2:8 | 2,500 ppm | 380 cps stable emulsion | — | — |
| D | 2:8 | 500 ppm | 300 cps stable emulsion | — | — |
| E | 4:6 | 500 ppm | Unstable emulsion | — | — |
| C:D | — | — | — | 5:1 | Excellent |
| C:D | — | — | — | 3:1 | good to excellent |
| C:D | — | — | — | 7:1 | good |
| B:C | — | — | — | 5:1 | good |
| A:B | — | — | — | 5:1 | good |

13

Example 7 Effect of Crosslinking Level

The synthesis procedure of Example 1 was followed, except that part of the acrylic acid was replaced by acrylamide. Various amounts of the crosslinking agent N,N-methylenebisacrylamide, were examined in the recipe that gives stable emulsion (i.e. no microbead formation). The amounts (ppm) of N,N-methylenebisacrylamide were based on the total weight of the monomers in the recipe.

The polymer emulsions thus synthesized were evaluated (particularly for the paste-body and slip) in the same manner as in Example 1. Results are gathered in Table VIII.

TABLE VIII: Effect of Crosslinking Level

| Experiment | Acrylamide/ Sodium Acrylate Molar Ratio | Amount of N'N-methylenebis- acrylamide (based on total monomers) | Emulsion Viscosity | Paste-body |
|---|---|---|---|---|
| A | 2:8 | 2500 ppm | 600 cps | excellent |
| B | 2:8 | 1500 ppm | 600 cps | excellent |
| C | 2:8 | 1000 ppm | 580 cps | excellent |
| D | 2:8 | 500 ppm | 550 cps | good-excellent |
| E | 2:8 | 250 ppm | 600 cps | acceptable |
| F | 2:8 | 100 ppm | 640 cps | barely acceptable |
| G | 2:8 | 50 ppm | 440 cps | not acceptable |
| H | 2:8 | 25 ppm | 640 cps | not acceptable |
| I | 2:8 | 5 ppm | 690 cps | not acceptable |
| J | 4:6 | 2500 ppm | 600 cps | excellent |
| K | 4:6 | 1500 ppm | 610 cps | excellent |
| L | 4:6 | 1000 ppm | 560 cps | excellent |
| M | 4:6 | 500 ppm | 570 cps | good-excellent |
| N | 4:6 | 250 ppm | 860 cps | acceptable |
| O | 4:6 | 100 ppm | 1070 cps | barely acceptable |

TABLE VIII: Effect of Crosslinking Level (cont.)

| Experiment | Acrylamide/Sodium Acrylate Molar Ratio | Amount of N'N-methylenebis-acrylamide (based on total monomers) | Emulsion Viscosity | Paste-body |
|---|---|---|---|---|
| P | 4:6 | 50 ppm | 400 cps | not acceptable |
| Q | 4:6 | 25 ppm | 610 cps | not acceptable |
| R | 4:6 | 5 ppm | 610 cps | not acceptable |
| S | A + J Blend 5:1 weight ratio | - | 600 cps | excellent |
| T | B + K Blend 5:1 weight ratio | - | 580 cps | excellent |
| U | C + L Blend 5:1 weight ratio | - | 560 cps | excellent |
| V | D + M Blend 5:1 weight ratio | - | 560 cps | good-excellent |
| W | E + N Blend 5:1 weight ratio | - | 600 cps | acceptable |
| X | F + O Blend 5:1 weight ratio | - | 660 cps | barely acceptable |
| Y | G + P Blend 5:1 weight ratio | - | 440 cps | not acceptable |
| Z | H + Q Blend 5:1 weight ratio | - | 640 cps | not acceptable |
| AA | I + R Blend 5:1 weight ratio | - | 700 cps | not acceptable |

## Claims

1. An adhesive composition suitable for application to a wallcovering to form a prepasted wallcovering, which composition is a water-in-oil emulsion comprising an organic solvent, a surfactant, a water-

EP 0 396 304 B1

swollen crosslinked ionic polymeric component obtained by polymerising one or more ethylenically unsaturated water-soluble monomers in the presence of water and at least 100 ppm of a water-soluble crosslinking agent, the water content of the composition being such that, when applied to a wallcovering the composition forms a continuous, substantially particle-free film.

2. A composition according to claim 1 which contains two polymeric components which differ from each other in their degree of crosslinking or their degree of charge or both, and wherein at least 50% of the monomers incorporated into the polymeric components are anionically charged monomers.

3. A composition according to claim 1 wherein the water-soluble monomer is selected from alkali metal acrylates, alkali metal methacrylates and alkali metal salts of 2-acrylamido-2-methylpropanesulfonic acid.

4. A composition according to claim 3 wherein the water-soluble monomer also comprises acrylamide, 2-hydroxyethylacrylamide, hydroxypropylacrylamide, dimethylaminoethylacrylate, dimethylaminoethylmethacrylate or vinyl pyrrolidone.

5. A composition according to claim 1 which contains two polymeric components comprising a highly crosslinked homopolymer of sodium acrylate crosslinked with 11,000 ppm of N,N'-methylenebisacrylamide, based on the weight of sodium acrylate, and a low crosslinked homopolymer of sodium acrylate crosslinked with 2,500 ppm of N,N'-methylenebisacrylamide, based on the weight of sodium acrylate, the highly crosslinked homopolymer being present in excess over the low crosslinked homopolymer.

6. A composition according to claim 1 which contains two polymeric components comprising a copolymer of 80 mole % sodium acrylate and 20 mole % acrylamide and a copolymer of 60 mole % sodium acrylate and 40 mole % acrylamide, the amount of copolymer containing 80% of sodium acrylate being present in excess of the copolymer containing 60% of sodium acrylate, the copolymers each being crosslinked with 1000 to 2500 ppm of N,N'-methylenebisacrylamide, based on the weight of sodium acrylate and acrylamide.

7. A composition according to claim 1 which contains two polymeric components comprising a copolymer of 80 mole % sodium acrylate and 20 mole % acrylamide and a copolymer of 60 mole % sodium acrylate and 40 mole % acrylamide, the ratio of the amount of the copolymer containing 80% of sodium acrylate to the amount of the copolymer containing 60% sodium acrylate being in the range 9:1 to 1:1.

8. A composition according to claim 1 which contains two polymeric components comprising a copolymer of 80 mole % sodium acrylate and 20 mole % acrylamide or hydroxyethylacrylate crosslinked with 1000 to 2500 ppm of crosslinking agent and a copolymer of 80 mole % sodium acrylate and 20 mole % acrylamide crosslinked with 500 ppm of crosslinking agent.

9. A composition according to claim 1 which contains two polymeric components comprising a copolymer of 80 mole % of a mixture of sodium acrylate and methacrylate and 20 mole % acrylamide crosslinked with 1000 to 2500 ppm of crosslinking agent and a copolymer of 60 mole % of a mixture of sodium acrylate and methacrylate and 40 mole % acrylamide crosslinked with 1000 ppm to 2500 ppm of crosslinking agent.

10. A composition according to claim 1 which contains two polymeric components comprising a copolymer of 80 mole % of a mixture of sodium acrylate and methacrylate and 20 mole % acrylamide crosslinked with 1000 to 2500 ppm of crosslinking agent and a copolymer of 80 mole % of a mixture of sodium acrylate and methacrylate and 20 mole % acrylamide crosslinked with 500 ppm of crosslinking agent.

11. A prepasted wallcovering bearing on one surface an adhesive comprising a composition according to any of claims 1 to 10 from which some or all of the said water and solvent are absent.

12. A process for preparing a prepasted wallcovering, which process comprises applying a composition according to any of claims 1 to 10 to a surface of a wallcovering and drying said composition.

17

**Patentansprüche**

1. Klebstoffzusammensetzung, geeignet zum Auftragen auf eine Wandbedeckung unter Bildung einer vorgeleimten Wandbedeckung, die eine Wasser-in-Öl-Emulsion darstellt, umfassend ein organisches Lösungsmittel, ein Tensid, eine in Wasser gequollene, vernetzte, ionische, polymere Komponente, erhalten durch Polymerisieren eines oder mehrerer ethylenisch ungesättigter Wasserlöslicher Monomere in Gegenwart von Wasser und mindestens 100 ppm eines Wasserlöslichen Vernetzungsmittels, wobei der Wassergehalt der Zusammensetzung derart ausgelegt ist, daß die Zusammensetzung, wenn sie auf eine Wandbedeckung aufgetragen wird, einen kontinuierlichen, im wesentlichen teilchenfreien Film bildet.

2. Zusammensetzung nach Anspruch 1, die zwei polymere Komponenten enthält, die sich voneinander in deren Vernetzungsgrad oder deren Ladungsgrad oder beidem unterscheiden und worin mindestens 50 % der Monomere, die in den polymeren Komponenten eingesetzt werden, anionisch geladene Monomere sind.

3. Zusammensetzung nach Anspruch 1, worin das wasserlösliche Monomer ausgewählt ist aus Alkalimetallacrylaten, Alkalimetallmethacrylaten und Alkalimetallsalzen von 2-Acrylamido-2-methylpropansulfonsäure.

4. Zusammensetzung nach Anspruch 3, worin das wasserlösliche Monomer ebenfalls Acrylamid, 2-Hydroxyethylacrylamid, Hydroxypropylacrylamid, Dimethylaminoethylacrylat, Dimethylaminoethylmethacrylat oder Vinylpyrrolidon umfaßt.

5. Zusammensetzung nach Anspruch 1, die zwei polymere Komponenten enthält, umfassend ein hochvernetztes Homopolymer von Natriumacrylat, vernetzt mit etwa 11 000 ppm N,N'-Methylenbisacrylamid, bezogen auf das Gewicht von Natriumacrylat, und ein geringvernetztes Homopolymer von Natriumacrylat, vernetzt mit etwa 2 500 ppm N,N'-Methylenbisacrylamid, bezogen auf das Gewicht von Natriumacrylat, wobei das hochvernetzte Homopolymer im Überschuß zu dem geringvernetzten Homopolymer vorliegt.

6. Zusammensetzung nach Anspruch 1, die zwei polymere Komponenten enthält, umfassend ein Copolymer von etwa 80 Mol-% Natriumacrylat und etwa 20 Mol-% Acrylamid und ein Copolymer von etwa 60 Mol-% Natriumacrylat und etwa 40 Mol-% Acrylamid, wobei die Menge des Copolymers, welches etwa 80 % Natriumacrylat enthält, in einem Überschuß des Copolymers, welches etwa 60 Mol-% Natriumacrylat enthält, vorliegt, und die Copolymere jeweils mit 1 000 bis 2 500 ppm N,N'-Methylenbisacrylamid, bezogen auf das Gewicht von Natriumacrylat und Acrylamid, vernetzt sind.

7. Zusammensetzung nach Anspruch 1, die zwei polymere Komponenten enthält, umfassend ein Copolymer von 80 Mol-% Natriumacrylat und 20 Mol-% Acrylamid und ein Copolymer von 60 Mol-% Natriumacrylat und 40 Mol-% Acrylamid, wobei das Verhältnis der Menge des Copolymers, welches 80 % Natriumacrylat enthält, zu der Menge des Copolymers, welches 60 % Natriumacrylat enthält, im Bereich von 9:1 bis 1:1 liegt.

8. Zusammensetzung nach Anspruch 1, die zwei polymere Komponenten enthält, umfassend ein Copolymer von etwa 80 Mol-% Natriumacrylat und etwa 20 Mol-% Acrylamid oder Hydroxyethylacrylat, vernetzt mit 1 000 bis 2 500 ppm Vernetzungsmittel, und ein Copolymer von etwa 80 Mol-% Natriumacrylat und etwa 20 Mol-% Acrylamid, vernetzt mit etwa 500 ppm Vernetzungsmittel.

9. Zusammensetzung nach Anspruch 1, die zwei polymere Komponenten enthält, umfassend ein Copolymer von etwa 80 Mol-% eines Gemisches von Natriumacrylat und -methacrylat und etwa 20 Mol-% Acrylamid, vernetzt mit 1 000 bis 2 500 ppm Vernetzungsmittel, und ein Copolymer von etwa 60 Mol-% eines Gemisches von Natriumacrylat und -methacrylat und etwa 40 Mol-% Acrylamid, vernetzt mit 1 000 ppm bis 2 500 ppm Vernetzungsmittel.

10. Zusammensetzung nach Anspruch 1, die zwei polymere Komponenten enthält, umfassend ein Copolymer von etwa 80 Mol-% eines Gemisches von Natriumacrylat und -methacrylat und etwa 20 Mol-% Acrylamid, vernetzt mit 1 000 bis 2 500 ppm Vernetzungsmittel, und ein Copolymer von etwa 80 Mol-% eines Gemisches von Natriumacrylat und -methacrylat und etwa 20 Mol-% Acrylamid, vernetzt mit etwa 500 ppm Vernetzungsmittel.

**11.** Vorgeleimte wandbedeckung, die an einer Oberfläche einen Klebstoff, umfassend eine Zusammensetzung nach einem der Ansprüche 1 bis 10, trägt, von dem etwas oder die Gesamtheit an Wasser oder Lösungsmittel nicht vorliegen.

**12.** Verfahren zur Herstellung einer vorgeleimten Wandbedeckung, wobei das Verfahren Auftragen einer Zusammensetzung nach einem der Ansprüche 1 bis 10 auf die Oberfläche einer Wandbedeckung und Trocknen der Zusammensetzung umfaßt.

**Revendications**

**1.** Composition de colle ou substance adhésive apte à l'application sur un revêtement mural pour former un revêtement mural ou tenture préencollé, laquelle, composition est une émulsion huileuse comprenant un solvant organique, un agent tensioactif, un composant polymère ionique réticulé gonflé à l'eau, obtenu par polymérisation d'un ou de plusieurs monomères hydrosolubles éthyléniquement insaturés en présence d'eau et au moins 100 ppm d'un agent réticulant hydrosoluble, la teneur en eau de la composition étant telle que lorsqu'elle est appliquée sur un revêtement mural, elle forme une pellicule continue, sensiblement exempte de particules.

**2.** Composition selon la revendication 1, contenant deux composants polymère qui diffèrent l'un de l'autre par leur degré de réticulation ou leur degré de charge ou par les deux à la fois, et dans laquelle au moins 50 % des monomères incorporée dans les composants polymère sont des monomères chargés anioniquement.

**3.** Composition selon la revendication 1, dans laquelle le monomère hydrosoluble est choisi parmi les acrylates de métaux alcalins, les méthacrylates de métaux alcalins et les sels de métaux alcalins de l'acide 2-acrylamido-2-méthylpropanesulfonique.

**4.** Composition selon la revendication 3, dans laquelle le monomère hydrosoluble comprend également l'acrylamide, le 2-hydroxyéthylacrylamide, l'hydroxypropylacrylamide, le diméthylaminoéthylacrylate, le diméthylaminoéthylméthacrylate ou la vinylpyrrolidone.

**5.** Composition selon la revendication 1, contenant deux composants polymère qui comprennent un homopolymère fortement réticulé d'acrylate de sodium, réticulé avec environ 11 000 ppm de N,N'-méthylènebisacrylamide, rapporttéee su poids de l'acrylate de sodium et un homopolymère faiblement réticulé d'acrylate de sodium réticulé avec environ 2500 ppm de N,N'-méthylènebisacrylamide, rapportées au poids de l'acrylate de sodium, l'homopolymère fortement réticulé étant présent en excédent par rapport à l'homopolymère faiblement réticulé.

**6.** Composition selon la revendication 1, contenant deux composants polymère qui comprennent un copolymère d'environ 80 % en mole d'acrylate de sodium et environ 20 % en mole d'acrylamide et un copolymère d'environ 60 % en mole d'acrylate de sodium et environ 40 % en mole d'acrylamide, la quantité de copolymère contenant environ 40 % d'acrylate de sodium étant présente en excédent du copolymère contenant environ 60 % d'acrylate de sodium, les copolymères étant chacun réticulés avec 1000 à 2500 ppm de N,N'-méthylènebisacrylamide, rapportées au poids de l'acrylate de sodium et d'acrylamide.

**7.** Composition selon la revendication 1, contenant deux composants polymère qui comprennent un copolymère de 80 % en mole d'acrylate de sodium et 20 % en mole d'acrylamide et un copolymère de 60 % en mole d'acrylate de sodium et 40 % en mole d'acrylamide, le rapport entre la quantité de copolymère contenant 80 % d'acrylate de sodium et la quantité du copolymère contenant 60 % d'acrylate de sodium se situant dans la plage de 9:1 à 1:1.

**8.** Composition selon la revendication 1, contenant deux composante polymère qui comprennent un copolymère d'environ 80 % en mole d'acrylate de sodium et environ 20 % en mole d'acrylamide ou d'hydroxyéthylacrylate réticulé avec 1000 à 2500 ppm d'agent réticulant et un copolymère d'environ 80 % on mole d'acrylate de sodium et environ 20 % en mole d'acrylamide réticulé avec environ 500 ppm d'agent réticulant.

9. Composition selon la revendication 1, contenant deux composants polymère qui comprennent un copolymère d'environ 80 % en mole d'un mélange d'acrylate de sodium et de méthacrylate et environ 20 % en mole d'acrylamide réticulé avec 1000 à 2500 ppm d'agent réticulant et un copolymère d'environ 60 % en mole d'un mélange d'acrylate de sodium et de méthacrylate et environ 40 % en mole d'acrylamide réticulé avec 1000 ppm à 2500 ppm d'agent réticulant.

10. Composition selon la revendication 1, contenant deux composants polymère qui comprennent un copolymère d'environ 80 % en mole d'un mélange d'acrylate de sodium et de méthacrylate et environ 20 % en mois d'acrylamide réticulé avec 1000 à 2500 ppm d'agent réticulant et un copolymère d'environ 40 % en mols du mélange d'acrylate de sodium et de méthacrylate et environ 20 % en mole d'acrylamide réticulé avec environ 500 ppm d'agent réticulant.

11. Revêtement mural ou tenture préencollé portant sur une surface une substance adhésive ou colle comprenant une composition selon l'une quelconque des revendications 1 à 10 en l'absence d'une partie ou de la totalité de l'eau et du solvant.

12. Procédé pour préparer un revêtement mural préencollé, lequel procédé comprend l'application d'une composition selon l'une quelconque des revendications 1 à 10, sur une surface d'une tenture murale et le séchage de cette composition.